(19) Europäisches Patentamt
European Patent Office
Office européen des brevets

(11) **EP 2 151 476 A1**

(12) **EUROPEAN PATENT APPLICATION**
published in accordance with Art. 153(4) EPC

(43) Date of publication:
**10.02.2010 Bulletin 2010/06**

(21) Application number: **08721532.3**

(22) Date of filing: **07.03.2008**

(51) Int Cl.:
*C08L 7/00* (2006.01)    *B60C 1/00* (2006.01)
*B60C 15/06* (2006.01)   *C08K 3/04* (2006.01)
*C08K 3/36* (2006.01)    *C08K 5/5419* (2006.01)
*C08L 15/00* (2006.01)

(86) International application number:
**PCT/JP2008/054114**

(87) International publication number:
**WO 2008/142897 (27.11.2008 Gazette 2008/48)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **22.05.2007  JP 2007135642
11.06.2007  JP 2007154287**

(71) Applicant: **Sumitomo Rubber Industries, Ltd.
Kobe-shi, Hyogo 651-0072 (JP)**

(72) Inventor: **KAWASAKI, Satoshi
Kobe-shi
Hyogo 651-0072 (JP)**

(74) Representative: **Manitz, Finsterwald & Partner
GbR
Martin-Greif-Strasse 1
80336 München (DE)**

(54) **RUBBER COMPOSITION FOR TIRE AND PNEUMATIC TIRE**

(57)    There are provided a rubber composition for tire including a rubber component containing at least one selected from the group consisting of natural rubber, epoxidized natural rubber and deproteinized natural rubber; silica; and a silane compound represented by the following general formula (1)

$$(X)_n\text{-Si-}Y_{(4-n)} \qquad (1)$$

(wherein X represents a methoxy group or an ethoxy group, Y represents a phenyl group or a straight-chain or branched alkyl group, and n represents an integer of 1 to 3), and a pneumatic tire using the same. The rubber composition for tire can be suitably used for manufacturing bead apex rubber and base tread rubber of tire.

**EP 2 151 476 A1**

**Description**

TECHNICAL FIELD

The present invention relates to a rubber composition used for tire, and more specifically to a rubber composition for bead apex and a rubber composition for base tread of air-filled tire. The present invention also relates to an air-filled tire having bead apex rubber or base tread rubber composed of the rubber composition.

BACKGROUND ART

Conventionally, in a rubber composition for bead apex of tire, a large amount of carbon black is blended as a filler for improving strength and hardness of bead apex rubber. Such a rubber composition containing such a large amount of carbon black has relatively good viscosity, and extrusion workability thereof has little been regarded as problematic. In a rubber composition for base tread of tire, in addition to natural rubber (NR) exhibiting excellent rolling resistance, styrene butadiene rubber (SBR), polybutadiene rubber or the like is blended, and further, carbon black is blended to achieve satisfactory gripping property, rolling resistance and durability when tread part is abraded. All of these styrene butadiene rubber (SBR), polybutadiene rubber and carbon black are materials derived from petroleum resources.

However, in recent years, regulations on carbon dioxide emissions have been strengthened in response to increased emphasis on environmental problems. Additionally, since standing stock of petroleum is limited, use of raw materials derived from petroleum resources is also limitative. Such a trend that emphasizes environments has no exception also in the field of tire, and it is demanded to develop a rubber composition for tire in which part or all of the raw materials derived from petroleum resources currently used is replaced by raw materials that are not derived from petroleum resources.

For example, Japanese Patent Laying-Open No. 2003-63206 discloses an ecological tire wherein silica or the like which is a material derived from non-petroleum resource is used as an alternative material for carbon black.

However, in a rubber composition for bead apex, when a white filler such as silica is used in place of carbon black, viscosity of the rubber composition increases, so that the extrusion workability deteriorates. When a white filler such as silica is used in a rubber composition for base tread, it is difficult to concurrently satisfy the gripping property, rolling resistance and durability in the case of abrasion of tread part which are important properties of base tread.

Japanese Patent Laying-Open No. 7-118454, Japanese Patent Laying-Open No. 7-292158, Japanese Patent Laying-Open No. 9-87427 and Japanese Patent Laying-Open No. 10-60175 describe blending a silylating agent in a rubber composition for tire tread or in a rubber composition for side wall. However, addition of a silylating agent in these patent documents aims at improving gripping property or at improving water repellency, and the rubber compositions described in these documents are not applicable to a rubber composition for bead apex which requires different properties from those of a rubber composition for tire tread or a rubber composition for side wall. Particularly, in the rubber compositions described in these documents, viscosity and extrusion workability of rubber composition are not considered. Also concurrent achievement of gripping property, rolling resistance and durability in the case of abrasion of tread part in base tread is not considered, and there is a room for improvement.

As described above, it is the current state of art that in a rubber composition in which raw materials derived from petroleum resources are replaced by raw material derived from non-petroleum resources, a rubber composition which is suitably used for bead apex rubber having excellent extrusion workability while maintaining excellent rubber hardness and rubber strength, and a rubber composition which is suitably used for base tread rubber in which gripping property, rolling resistance and durability in the case of abrasion of tread part is concurrently achieved have not been realized.

Patent Document 1: Japanese Patent Laying-Open No. 2003-63206
Patent Document 2: Japanese Patent Laying-Open No. 7-118454
Patent Document 3: Japanese Patent Laying-Open No. 7-292158
Patent Document 4: Japanese Patent Laying-Open No. 9-87427
Patent Document 5: Japanese Patent Laying-Open No. 10-60175

DISCLOSURE OF THE INVENTION

PROBLEMS TO BE SOLVED BY THE INVENTION

The present invention was made to solve the above problems, and it is an object of the present invention to provide a rubber composition for tire in which raw materials derived from non-petroleum resources are contained in higher content compared to conventional cases, sufficient consideration is taken for resource saving and environment protection, and excellent performance is exhibited and characteristics required for different parts are satisfied regardless of the part such as bead apex rubber or base tread rubber to which the rubber composition is applied.

It is another object of the present invention to provide a pneumatic tire comprising bead apex rubber or base tread rubber consisting of the rubber composition.

MEANS FOR SOLVING THE PROBLEMS

A rubber composition for tire of the present invention includes: a rubber component containing at least one kind selected from the group consisting of natural rubber (NR), epoxidized natural rubber (ENR) and deproteinized natural rubber (DPNR); silica; and a silane compound represented by the following general formula (1)

$$(X)_n\text{-Si-}Y_{(4-n)} \qquad (1)$$

(wherein X represents a methoxy group or an ethoxy group, Y represents a phenyl group or a straight-chain or branched alkyl group, and n represents an integer of 1 to 3). The rubber composition for tire of the present invention can be desirably used for manufacturing bead apex rubber and base tread rubber of tire.

When the rubber composition for tire of the present invention is a rubber composition used for manufacturing bead apex rubber (hereinafter, referred to as rubber composition for bead apex), it is preferred that the rubber composition contains 60 parts by mass or more of silica, relative to 100 parts by mass of the rubber component, and contains 4 to 16 parts by mass of silane compound represented by the above general formula (1), relative to 100 parts by mass of the rubber component. The rubber composition for bead apex according to the present invention may further contain 5 parts by mass or less of carbon black, relative to 100 parts by mass of the rubber component. Preferably, the rubber composition for bead apex according to the present invention further contains 5 to 15 parts by mass of silane coupling agent, relative to 100 parts by mass of the silica.

When the rubber composition of the present invention is a rubber composition used for manufacturing base tread rubber (hereinafter, referred to as rubber composition for base tread), the rubber component is a natural type rubber component composed of 5 to 85% by mass of natural rubber and 95 to 15% by mass of epoxidized natural rubber, and preferably contains 20 to 100 parts by mass of silica, relative to 100 parts by mass of the natural type rubber component, and 4 to 16 parts by mass of silane compound represented by the general formula (1), relative to 100 parts by mass of silica.

The rubber composition for base tread according to the present invention may further contain 60 parts by mass or less of polybutadiene rubber and/or styrene butadiene rubber, relative to 100 parts by mass of the natural type rubber component. Preferably, the rubber composition for base tread of the present invention further contains 4 to 20 parts by mass of silane coupling agent, relative to 100 parts by mass of silica.

The present invention also provides a pneumatic tire comprising bead apex rubber or base tread rubber consisting of the above rubber composition for tire.

EFFECTS OF THE INVENTION

According to the present invention, there are provided a rubber composition for tire in which raw materials derived from non-petroleum resources are contained in higher content compared to conventional cases, sufficient consideration is taken for resource saving and environment protection, and excellent performance is exhibited and characteristics required for different parts are satisfied regardless of the part such as bead apex rubber or base tread rubber to which the rubber composition is applied, and a pneumatic tire comprising bead apex rubber or base tread rubber consisting of the rubber composition for tire.

BRIEF DESCRIPTION OF THE DRAWING

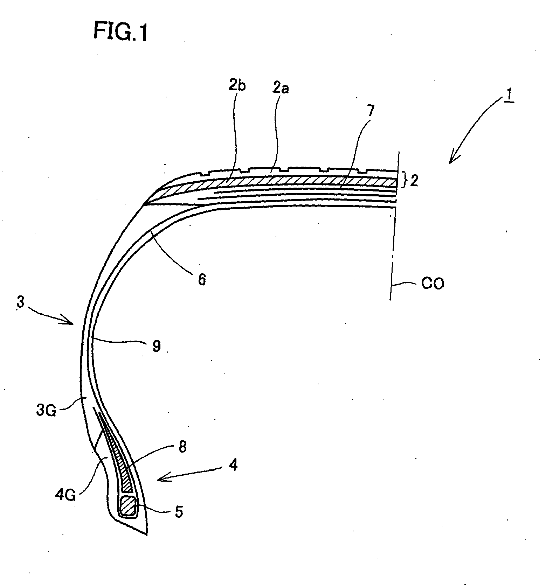

Fig. 1 is a schematic section view showing one example of a pneumatic tire of the present invention.

DESCRIPTION OF THE REFERENCE SIGNS

1 tire, 2 tread part, 2a cap tread part, 2b base tread part, 3 side wall part, 4 bead part, 5 bead core, 6 carcass, 7 belt layer, 8 bead apex rubber, 9 inner liner rubber, 3G side wall rubber , 4G clinch rubber

BEST MODES FOR CARRYING OUT THE INVENTION

A rubber composition for tire of the present invention has a rubber component containing at least one kind selected from the group consisting of natural rubber (NR), epoxidized natural rubber (ENR) and deproteinized natural rubber (DPNR), silica, and a specific silane compound. The rubber composition for tire of the present invention can be suitably used, for example, as a rubber composition for bead apex and a rubber composition for base tread. In the following, these rubber compositions will be described in detail.

<Rubber composition for bead apex>

The rubber composition for bead apex of the present invention is a rubber composition in which the proportion of materials derived from non-petroleum resources is high, sufficient consideration is made for resource saving and environment protection, viscosity is made smaller, and excellent extrusion workability is realized. Also rubber hardness and rubber strength of the obtainable rubber are excellent.

(Rubber component)

In the rubber composition for bead apex according to the present invention, a rubber component which is at least one kind selected from natural rubber (NR), epoxidized natural rubber (ENR), deproteinized natural rubber (DPNR) and other natural rubbers, dien-based synthetic rubbers and the like is blended.
Preferably, the rubber composition for bead apex according to the present invention contains natural rubber (NR) as the rubber component. When the rubber composition contains natural rubber (NR), content of the natural rubber (NR) in the rubber component is preferably 10% by mass or more, and more preferably 30% by mass or more. When the content ofNR is less than 10% by mass, the workability tends to deteriorate. It is also preferred that the content ofNR in the rubber component is 100% by mass.
As the natural rubber (NR), those conventionally used in rubber industries may be used, and examples thereof may include natural rubbers of the grade such as KR7, TSR20.
The rubber composition for bead apex according to the present invention may contain epoxidized natural rubber (ENR) as the rubber component. Epoxidized natural rubber (ENR) is the natural rubber in which unsaturated double bond is epoxidized, and has increased molecular cohesion due to epoxy groups which are polar groups. Therefore, it has higher glass transition temperature (Tg) than natural rubber (NR) and has excellent mechanical strength, abrasion resistance and air permeation resistance. In particular, when silica is blended in the rubber composition, mechanical strength and abrasion resistance comparable to those in the case of blending carbon black in the rubber composition can be achieved owing to the reaction between a silanol group on silica surface and an epoxy group of epoxidized natural rubber.
As the epoxidized natural rubber (ENR), commercially available products may be used, or epoxidized natural rubber (NR) may be used. The method of epoxidizing NR is not particularly limited, and chlorohydrin method, direct oxidation method, hydrogen peroxide method, alkylhydroperoxide method, peracid method and the like may be recited. As the peracid method, for example, the method of causing organic peracid such as peracetic acid or performic acid to react on the natural rubber can be recited.
Epoxidation ratio of epoxidized natural rubber (ENR) is not particularly limited, however it is preferably 5% by mole or more, and more preferably 10% by mole or more. When epoxidation ratio of ENR is less than 5% by mole, sufficient rubber strength tends not to be obtained in the bead apex rubber which is obtainable by using both ENR and NR because ENR and NR are compatible. Further, epoxidation ratio of epoxidized natural rubber (ENR) is preferably 60% by mole or less, and more preferably 55% by mole or less. When epoxidation ratio of ENR is more than 60% by mole, the obtained rubber for bead apex does not have sufficient strength, and adhesiveness with widely-used rubber tends to decrease. In the present specification, epoxidation ratio of epoxidized natural rubber (ENR) means (number of epoxidized double bonds) / (number of double bonds before epoxidation). Concretely, ENR (ENR25) having an epoxidation ratio of 25% by mole or ENR (ENR 50) having an epoxidation ratio of 50% by mole may be preferably used.
Only one kind of ENR may be used, or two or more kinds of ENRs having different epoxidation ratios may be used.
When the rubber composition for bead apex of the present invention contains epoxidized natural rubber (ENR), content of epoxidized natural rubber (ENR) in the rubber component is preferably 20% by mass or more, and more preferably 30% by mass or more from the view point of mechanical strength. Further, the content of epoxidized natural rubber (ENR) in the rubber component is preferably 80% by mass or less, and more preferably 70% by mass or less. When the content of ENR is more than 80% by mass, workability tends to deteriorate. The rubber composition for bead apex according to the present invention may contain only epoxidized natural rubber (ENR) as the rubber component or may contain no ENR.
The rubber composition for bead apex of the present invention may contain deproteinized natural rubber (DPNR) as the rubber component. Usually, about 5 to 10% by mass of non-rubber components such as protein and lipid are present in natural rubber (NR). Such non-rubber components, in particular, protein is believed to cause entanglement of molecular chain, and causes gelation. In order to avoid such problems, it is extremely advantageous to blend deproteinized natural rubber (DPNR) in which non-rubber component in natural rubber is removed, in the rubber composition.

Here, weight average molecular weight (gel permeation chromatography (GPC), in terms of polystyrene) of the deproteinized natural rubber (DPNR) is preferably 1400000 or more. When the weight average molecular weight is less than 1400000, the crude rubber strength decreases. Nitrogen content of the deproteinized natural rubber (DPNR) is preferably 0.1% by mass or less, more preferably 0.08% by mass or less, and still preferably 0.05% by mass or less. Nitrogen content of more than 0.1% by mass will cause gelation. Nitrogen content of deproteinized natural rubber (DPNR) is measured by RRIM method (Rubber Research Institute of Malaysia method).

When the rubber composition for bead apex according to the present invention contains deproteinized natural rubber (DPNR), content of the deproteinized natural rubber (DPNR) in the rubber component is preferably 10% by mass or more, and more preferably 50% by mass or more from the view point of workability. Further, the content of the deproteinized natural rubber (DPNR) in the rubber component is preferably 80% by mass or less, and more preferably 70% by mass or less. When the content of the DPNR is more than 80% by mass, the cost rises. The rubber composition for bead apex according to the present invention may contain only deproteinized natural rubber (DPNR) as the rubber component or may contain no DPNR.

Deproteinized natural rubber (DPNR) may be obtained by subjecting natural rubber (NR) to deproteinizing process. As a deproteinizing process of natural rubber (NR), the following methods can be exemplified.

(a) Decomposing protein by addition of protein catabolic enzyme or bacteria to natural rubber latex.
(b) Decomposing protein by addition of alkaline to natural rubber latex, and by heating.
(c) Liberating protein adsorbed to natural rubber latex by means of surfactant.

As the natural rubber latex used in deproteinizing process, field latex, ammonia-processed latex and the like may be used without any particular limitation.

As the protein catabolic enzyme used in the above method (a), conventionally known enzymes may be used, and, for example, protease and the like, but are not particularly limited thereto, are preferably used. Protease may be derived from bacterium, filamentous fungi or yeast, and among these, protease derived from bacterium is preferred. Also lipase, esterase, amylase, laccase, cellulase and the like enzymes may be additionally used.

When alkali protease is used as the protein catabolic enzyme, its activity is 0.1 to 50APU/g, and preferably 1 to 25APU/g. Here, activity of the protein catabolic enzyme is measured by using a modified method of Anson-Hemoglobin method [Anson. M. L. , J. Gen. Physiol. , 22, 79 (1938)]. Concretely, in a solution that is prepared so that the final concentration of urea-modified hemoglobin used as a substrate is 14.7 mg/mL, the reaction is allowed for 10 minutes at 25°C and pH 10.5, and then trichloroacetic acid is added to the reaction solution at a final concentration of 31.25 mg/mL. Then the soluble part of the trichloroacetic acid is caused to exhibit color by a phenol reagent, and the degree of color exhibition in 10-minute reaction is determined using a calibration curve wherein 1 mole of tyrosine is defined as 1 APU. Then the determined activity is converted to activity per one minute. Here, 1 APU refers to the amount of protease that gives the soluble content of trichloroacetic acid exhibiting the same degree of color per one minute with that achieved for 1 mole of tyrosine by a phenol reagent.

An adding amount of the protein catabolic enzyme is appropriately selected depending on the enzyme activity, and is usually 0.0001 to 20 parts by mass, and preferably 0.001 to 10 parts by mass, per 100 parts by mass of solid content of natural rubber latex. When the adding amount of protein catabolic enzyme is less than 0.0001 parts by mass, proteins in the natural rubber latex may not be sufficiently catabolized, while when the amount is more than 20 parts by mass, activity of the enzyme decreases, and the cost rises.

A treatment time by protein catabolic enzyme is not particularly limited, and may be appropriately selected depending on the enzyme activity. Usually, the treatment time is several minutes to about one week. During the protein catabolizing treatment, the natural rubber latex may be stirred or left still. Temperature regulation may be effected as is necessary, and appropriate temperature is 5 to 90°C, and preferably 20 to 60°C. When the treatment temperature is more than 90°C, enzyme is inactivated too fast, whereas when the treatment temperature is less than 5°C, enzymatic reaction is difficult to proceed.

As the surfactant used in the above method (c), for example, either one kind or two or more kinds of antonic surfactant, nonionic surfactant, and amphoteric surfactant can be used. Examples of antonic surfactant include carboxylic acid type surfactant, sulfonic acid type surfactant, sulfate ester type surfactant, phosphate ester type surfactant and the like. Examples of preferably used nonionic surfactant include polyoxyalkylene ether type surfactant, polyoxyalkylene ester type surfactant, polyol fatty acid ester type surfactant, saccharic fatty acid ester type surfactant, and alkylpolyglycoside type surfactant and the like. Examples of amphoteric surfactant include amino acid type surfactant, betaine type surfactant, and amine oxide type surfactant and the like.

In the above method (c), natural rubber latex is washed by using the surfactant, and thereby protein adsorbed to the natural rubber latex is caused to liberate. As a method of washing natural rubber latex particles by surfactant, natural rubber latex not having subjected to enzyme treatment may be washed, or natural rubber latex having subjected to enzyme treatment may be washed. Concrete examples of washing method includes a method of adding surfactant to natural rubber latex not having subjected to enzyme treatment or natural rubber latex having subjected to enzyme treatment, and conducting centrifugation, and a method of separating natural rubber latex particles by aggregation. When natural rubber latex is washed by centrifugation, centrifugation may be conducted once or several times. Usually, one centrifugation will provide deproteinized natural rubber latex in which protein is highly removed. The centrifugation process may be conducted after dilution with water so that rubber component of the natural rubber latex is 5 to 40% by mass, preferably 10 to 30% by mass.

An adding amount of the surfactant is 0.001 to 20 parts by mass, preferably 0.001 to 15 parts by mass, relative to 100 parts by mass of solid content of natural rubber latex.

In the above methods (a) and (c), other additives such as a pH modifier or a dispersing agent may be added when the protein catabolic enzyme or the surfactant is used.

Examples of the pH modifier include phosphate salts such as potassium dihydrogen phosphate, potassium hydrogen phosphate, sodium dihydrogen phosphate and sodium hydrogen phosphate; acetate salts such as potassium acetate and sodium acetate; acids such as sulfuric acid, acetic acid, hydrochloric acid, nitric acid, citric acid and succinic acid or salts thereof; ammonia, potassium hydroxide, sodium hydroxide, sodium carboanate, sodium hydrogen carbonate and so on. An adding amount of the pH modifier is usually 0.01 to 0.5 parts by mass, relative to 100 parts by mass of rubber solid content of natural rubber latex.

Examples of the dispersing agent include styrene sulfonic acid copolymer, naphthalene sulfonic acid formalin condensate, lignin sulfonic acid, polycyclic aromatic sulfonic acid copolymer, homopolymer and copolymer of acrylic acid and maleic anhydride, and copolymer of isobutylene-acrylic acid and isobutylene-maleic anhydride.

The deproteinized natural rubber latex obtained in the manner as described above may be caused to coagulate after removal of non-rubber component by, e.g., centrifugation, or may be caused to coagulate while non-rubber component is not removed. A method of coagulation is not particularly limited, and may be conducted by any known method. Usually, a coagulating method by unstabilizing the latex particles by addition of a coagulant such as acids, e.g., formic acid or sulfuric acid, or salts e.g., sodium chloride, or a coagulating method by unstabilizing the latex rubber particles by utilizing clouding point of surfactant is used.

Gel content of the deproteinized natural rubber is preferably 10% by mass or less. When the gel content is more than 10% by mass, viscosity of the unvulcanized rubber increases, and the workability tends to deteriorate. Gel content is measured as a toluene insoluble content.

The rubber composition for bead apex according to the present invention may contain modified natural rubber other than the aforementioned ones, dien-based synthetic rubber and the like. Examples of the dien-based synthetic rubber include styrene butadiene rubber (SBR), butadiene rubber (BR), styrene isoprene copolymer rubber, isoprene rubber (IR), butyl rubber (IIR), chloroprene rubber (CR), acrylonitrile butadiene rubber (NBR), halogenated butyl rubber (X-IIR), halogenated copolymer of isobutylene and p-methylstyrene and so on.

When the rubber composition for bead apex according to the present invention contains dien-based synthetic rubber, the content of dien-based synthetic rubber in the rubber component is preferably 50% by mass or less. From the view point of resource saving and environment protection, and for increasing content of non-petroleum resource, it is more preferred to contain no dien-based synthetic rubber, and it is still preferred that the rubber component is composed exclusively of at least one kind selected from natural rubber (NR), epoxidized natural rubber (ENR) and deproteinized natural rubber (DPNR).

(Silica)

The rubber composition for bead apex according to the present invention contains silica. Silica functions as a filler for reinforcement, and hardness of the obtained bead apex rubber can be improved by blending silica.

Silica may be prepared by wet process or dry process.

BET specific surface area of silica is preferably 70 $m^2/g$ or more, and more preferably 80 $m^2/g$ or more. When BET specific surface area of silica is less than 70$m^2/g$, sufficient hardness tends not to be obtained in the obtainable bead apex rubber. BET specific surface area of silica is preferably 300 $m^2/g$ or less, and more preferably 280 $m^2/g$ or less. When BET specific surface area of silica is more than 300 $m^2/g$, workability of rubber tends to decrease. Concretely, Ultrasil VN2 (BET specific surface area: 125 $m^2/g$), Ultrasil VN3 (BET specific surface area: 175 $m^2/g$) available from Degussa Co., and the like may be preferably used.

Content of silica is 60 parts by mass or more, relative to 100 parts by mass of rubber component. When the content of silica is less than 60 parts by mass, sufficient rubber hardness tends not to be obtained. The content of silica is more preferably 65 parts by mass or more, relative to 100 parts by mass of rubber component. The content of silica is preferably 100 parts by mass or less, and more preferably 90 parts by mass or less, relative to 100 parts by mass of rubber component. When the content of silica is more than 100 parts by mass, workability tends to deteriorate.

(Silane compound)

The rubber composition for bead apex according to the present invention contains a silane compound. By adding a silane compound, it is possible to obtain a rubber composition having lowered viscosity and excellent extrusion workability, while keeping excellent rubber hardness and rubber strength. Such effect is attributable to the fact that the silane compound reacts with active hydrogen group, and as a result, dispersion of silane compound in the rubber is improved.

Here, the silane compound used in the rubber composition for bead apex according to the present invention is a silane compound represented by the following general formula (1):

$$(X)_n\text{-Si-}Y_{(4-n)} \qquad (1)$$

(In the above formula (1), X represents a methoxy group or an ethoxy group, Y represents a phenyl group or a straight-chain or branched alkyl group, and n represents an integer of 1 to 3.)

In the above general formula (1), X is more preferably an ethoxy group for the reason that it has better compatibility with the rubber component. For the same reason, Y in the above general formula is more preferably a phenyl group. Further, in the above general formula (1), n is an integer from 1 to 3. When n is 0, it means that X is absent, and reactivity of the silane compound tends to excessively increase. When n is 4, it means that Y is absent, and reactivity of silane compound tends to decrease.

Concrete examples of silane compound represented by the above general formula (1) include methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, hexyltrimethoxysilane, hexyltriethoxysilane, decyltrimethoxysilane, trifluoropropyltrimethoxysilane and the like. These silane compounds may be used solely or in combination of two or more kinds. From the view point of compatibility with rubber and reduction in cost, phenyltriethoxysilane is preferred.

Content of silane compound is 4 parts by mass or more, and preferably 5 parts by mass or more, relative to 100 parts by mass of rubber component. When content of silane compound is less than 4 parts by mass, desired extrusion workability tends not to be obtained. Further, content of silane compound is 16 parts by mass or less, and preferably 15 parts by mass or less, relative to 100 parts by mass of rubber component. When content of silane compound is more than 16 parts by mass, rubber strength tends to deteriorate.

(Silane coupling agent)

Preferably, the rubber composition for bead apex according to the present invention contains a silane coupling agent together with silica. As the silane coupling agent, any conventionally used silane coupling agent may be used. Concrete examples thereof include sulfide type type silane coupling agents such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl)trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4trimethoxysilylbutyl) trisulfide, bis(3-triethoxysilylpropyl) disulfide, bis(2-triethoxysilylethyl)disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 3-triethoxysilylpropyl-N, N-dimethylthiocarbamoyl tetrasulfide, 2-triethoxysilylethyl-N, N-dimethylthiocarbamoyl tetrasulfide, 2-trimethoxysilylethyl-N, N-dimethylthiocarbamoyl tetrasulfide, 3-trimethoxysilylpropylbenzotiazolyl tetrasulfide, 3-triethoxysilylpropyl benzotiazolyl tetrasulfide, and 3-trimethoxysilylpropyl methacrylate monosulfide; mercapto type silane coupling agents such as 3-mercapto propyltrimethoxysilane, 3-mercapto propyltrimethoxysilane, 2-mercapto ethyltrimethoxysilane, and 2-mercapto ethyltrimethoxysilane; vinyl type silane coupling agents such as vinyl triethoxysilane, and vinyl trimethoxysilane; amino type silane coupling agents such as 3-aminopropyl triethoxysilane, 3-aminopropyl trimethoxysilane, 3-(2-aminoethyl) aminopropyl triethoxysilane, and 3-(2-aminoethyl)aminopropyl trimethoxysilane; glycidoxy type silane coupling agents such as γ-glycidoxypropyl triethoxysilane, γ-glycidoxypropyltrimethoxysilane, γ-glycidoxypropylmethyldiethoxysilane, and γ-glycidoxypropylmethyldimethoxysilane; nitro type silane coupling agents such as 3-nitropropyl trimethoxysilane, and 3-nitropropyltriethoxysilane; chloro type silane coupling agents such as 3-chloropropyltrimethoxysilane, 3-chloropropyltriethoxysilane, 2-chloroethyl trimethoxysilane, and 2-chloroethyltriethoxysilane and so on. These type silane coupling agents may be used solely or in combination of two or more kinds.

Among these, Si69 (bis(3-triethoxysilylpropyl) tetrasulfide), Si266 (bis(3-triethoxysilylpropyl)disulfide) available from Degussa Co., and the like are preferably used for the reason that they have excellent workability.

Content of silane coupling agent is preferably 5 parts by mass or more, and more preferably 8 parts by mass or more, relative to 100 parts by mass of silica. When the content is less than 5 parts by mass, sufficient rubber strength tends not to be obtained. Further, content of silane coupling agent is preferably 15 parts by mass or less, and more preferably 13 parts by mass or less, relative to 100 parts by mass of silica. Adding an amount exceeding 15 parts by mass will no longer improve rubber strength responding to the adding amount, although the cost tends to increase.

(Carbon black)

The rubber composition for bead apex according to the present invention may contain carbon black. BET specific surface area of carbon black is preferably 40m$^2$/g or more, and more preferably 70m$^2$/g or more. When BET specific surface area of silica is less than 50m$^2$/g, the reinforcing effect tends to be small. Further, BET specific surface area of silica is preferably 250m$^2$/g or less, and more preferably 200m$^2$/g or less. When BET specific surface area of silica is more than 250m$^2$/g, workability tends to decrease.

DBP (dibutyl phthalate) oil absorption of carbon black is preferably 60 to 120 mL/100 g, and more preferably 80 to 110 mL/100 g. When DBP oil absorption is less than 60 mL/100 g, reinforcing effect tends to be small, while it is more than 120 mL/100 g, workability tends to decrease.

When the rubber composition for bead apex of the present invention contains carbon black, the content is preferably 5 parts by mass or less, and more preferably 3 parts by mass or less, relative to 100 parts by mass of rubber component. By adding carbon black, rubber strength and rubber hardness can be further improved. However, from the view point of resource saving and environment protection, it is preferred that carbon black is not contained.

(Other blending agents)

The rubber composition for bead apex of the present invention may further contain other additives, for example, a vulcanizing agent, vulcanization accelerator, stearic acid, oil, wax, antioxidant, zinc oxide and the like, in addition to the components as described above.

As the vulcanizing agent, organic peroxide or sulfur-based vulcanizing agent may be used, and examples of the organic peroxide include benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butyl peroxy)hexane, 2,5-dimethyl-2,5-di(benzoyl peroxy) hexane, 2,5-dimethyl-2,5-di(t-butyl peroxy)hexyne-3 or 1,3-bis(t-butyl peroxy propyl)benzene, di-t-butyl peroxy-diisopropyl benzene, t-butyl peroxy benzene, 2,4-dichlorobenzoyl peroxide, 1,1-di-t-butyl peroxy-3,3,5-trimethyl siloxane, n-butyl-4,4-di-t-butyl peroxyvalerate and the like. Among these, dicumyl peroxide, t-butyl peroxy benzene and di-t-butyl peroxy-diisopropyl benzene are preferred. As the sulfur-based vulcanizing agent, for example, sulfur, morpholine disulfide and the like may be used. Among these, sulfur is preferred. These vulcanizing agents may be used solely or in combination of two or more kind.

As the vulcanization accelerator, any accelerator can be employed that contains at least one of sulfenamide type accelerator, thiazole type accelerator, thiuram type accelerator, thiourea type accelerator, guanidine type accelerator, dithiocarbamate type accelerator, aldehyde-amine type or aldehyde-ammonia type accelerator, imidazoline type accelerator and xanthate type accelerator. Examples of the sulfenamide type accelerator are sulfonamide-based compounds such as CBS (N-cyclohexyl-2-benzothiazyl sulfenamide), TBBS (N-tert-butyl-2-benzothiazyl sulfenamide), N,N-dicyclohexyl-2-benzothiazyl sulfenamide, N-oxydiethylene-2-benzothiazyl sulfenamide, N,N-diisopropyl-2-benzothiazole sulfenamide and the like. Examples of the thiazole type accelerator are thiazole-based compounds such as MBT (2-mercaptobenzothiazole), MBTS (dibenzothiazyl disulfide), sodium salt, zinc salt of 2-mercaptobenzothiazole, copper salt and cyclohexyl amine salt of 2-mercaptobenzothiazole, 2-(2,4-dinitrophenyl) mercaptobenzothiazole, 2-(2,6-diethyl-4-morpholinothio)benzothiazole and the like. Examples of the thiuram type accelerator are thiuram-based compounds such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide and the like. Examples of the thiourea type accelerator are thiourea-based compounds such as thiocarbamide, diethyl thiourea, dibutyl thiourea, trimethyl thiourea, diorthotolyl thiourea and the like. Examples of the guanidine type accelerator are guanidine-based compounds such as diphenylguanidine, diorthotolyl guanidine, triphenylguanidine, orthotolylbiguanide, diphenylguanidine phthalate and the like. Examples of the dithiocarbamate type accelerator are dithiocarbamate-based compounds such as zinc ethylphenyl dithiocarbamate, zinc butylphenyl dithiocarbamate, sodium dimethyl dithiocarbamate, zinc dimethyl dithiocarbamate, zinc diethyl dithiocarbamate, zinc dibutyl dithiocarbamate, zinc diamyl dithiocarbamate, zinc dipropyl dithiocarbamate, complex salt of zinc pentamethylene dithiocarbamate and piperidine, zinc hexadecyl (or octadecyl) isopropyl dithiocarbamate, zinc dibenzyl dithiocarbamate, sodium diethyl dithiocarbamate, piperidine pentamethylene dithiocarbamate, selemium dimethyl dithiocarbamate, tellurium diethyl dithiocarbamate, cadmium diamyl dithiocarbamate and the like. Examples of aldehyde-amine type or aldehyde-ammonia type accelerator are aldehyde-amine-based compounds or aldehyde-ammonia-based compounds such as reaction product of acetaldehyde and aniline, condensation product of butyraldehyde and aniline, hexamethylene tetramine, reaction product of acetaldehyde and ammonia and the like. Examples of imidazoline type accelerator are imidazoline-based compounds such as 2-mercapto imidazoline. Examples of xanthate type accelerator are xanthate-based compounds such as zinc dibutylxanthogenate. These vulcanization accelerators may be used solely or in combination of two or more kinds.

The antioxidant can appropriately be selected for use from amine type antioxidant, phenol type antioxidant, imidazole type antioxidant, metal salt of carbamate and the like.

As the oil, for example, process oil, vegetable oil or mixture thereof may be used. Examples of process oil include paraffin type process oil, naphthene type process oil, and aromatic type process oil. Examples of vegetable oil include castor oil, cotton seed oil, linseed oil, rape seed oil, soy bean oil, palm oil, cocoanut oil, arachis oil, rosin, pine oil, pine tar, tall oil, corn oil, rice oil, safflower oil, sesame oil, olive oil, sunflower oil, palm kernel oil, camellia oil, jojoba oil, macadamia nut oil, safflower oil and tung oil.

<Rubber composition for base tread>

The rubber composition for base tread of the present invention contains materials of non-petroleum resource at high content, and makes sufficient consideration on resource saving and environment protection, and provides a tire with excellent gripping property, rolling resistance and durability when the tread part is abraded.

(Rubber component)

The rubber composition for base tread of the present invention contains a natural type rubber component, and the natural type rubber component is composed of 5 to 85% by mass of natural rubber (NR) and 95 to 15% by mass of epoxidized natural rubber (ENR). By blending natural rubber (NR) and epoxidized natural rubber (ENR), it is possible to achieve the balance between wet performance and rolling resistance.

As the natural rubber (NR), those conventionally used in the rubber industry may be used. For example, natural rubber of such grade as KR7, TSR20 and the like can be recited.

Content of natural rubber (NR) in the natural type rubber component is 5 to 85% by mass. When the content of natural rubber (NR) in natural rubber type component is less than 5% by mass, the rubber strength of the obtainable base tread rubber tends to be insufficient. On the other hand, when the content is more than 85% by mass, abrasion resistance tends to be insufficient. The content of natural rubber (NR) in natural type rubber is preferably 10 to 50% by mass, and more preferably 10 to 40% by mass.

Epoxidation ratio of epoxidized natural rubber (ENR) is not particularly limited, and is preferably 5% by mole or more, and more preferably 10% by mole or more. When epoxidation ratio of ENR is less than 5% by mole, sufficient wet performance and rolling resistance tend not to be obtained because ENR is compatible with NR. Further, epoxidation ratio of epoxidized natural rubber (ENR) is preferably 60% by mole or less, and more preferably 50% by mole or less. When epoxidation ratio of ENR is more than 60% by mole, the rubber strength of the obtainable base tread rubber tends to be insufficient. Concretely, ENR having an epoxidation ratio of 25% by mole (ENR25), ENR having an epoxidation ratio of 50% by mole (ENR50) and the like may be preferably used.

Only one kind of ENR may be used, or two or more kinds of ENRs having different epoxidation ratios may be used.

Content of epoxidized natural rubber (ENR) in natural type rubber component is 15 to 95% by mass. When the content of ENR is less than 15% by mass, abrasion resistance tends to be insufficient. On the other hand, when the content of ENR is more than 95% by mass, the rubber strength of the obtainable base tread rubber tends to be insufficient.

The rubber composition for base tread of the present invention may further contain dien-based synthetic rubber, as well as the aforementioned natural type rubber component. Examples of the dien-based synthetic rubber include styrene butadiene rubber (SBR), polybutadiene rubber (BR), styrene isoprene copolymer rubber, isoprene rubber (IR), butyl rubber (IIR), chloroprene rubber (CR), acrylonitrile butadiene rubber (NBR), halogenated butyl rubber (X-IIR), halogenated copolymer of isobutylene and p-methylstyrene and so on. Among these, polybutadiene rubber (BR), styrene butadiene rubber (SBR) and combination thereof can be preferably used for achieving both rolling resistance and durability.

When the rubber composition for base tread of the present invention contains dien-based synthetic rubber, content of the dien-based synthetic rubber is preferably 60% by mass or less, relative to 100 parts by mass of natural type rubber component. However, in consideration of resource saving and environment protection, and for increasing the content of non-petroleum resource, it is preferred that dien-based synthetic rubber is not contained.

(Silica)

The rubber composition for base tread of the present invention contains silica. Silica functions as a filler for reinforcement, and wet performance of the obtainable base tread rubber can be improved and abrasion resistance and wet performance can be well balanced by blending silica.

Silica may be prepared by wet process or dry process.

BET specific surface area of silica is preferably 40 $m^2$/g or more, and more preferably 80 $m^2$/g or more. When BET specific surface area of silica is less than 40$m^2$/g, abrasion resistance tends to decrease. Further, BET specific surface area of silica is preferably 400 $m^2$/g or less, and more preferably 300 $m^2$/g or less. When BET specific surface area of silica is more than 400 $m^2$/g, workability of rubber tends to decrease. Concretely, Ultrasil VN2 (BET specific surface area: 125 $m^2$/g), Ultrasil VN3 (BET specific surface area: 175 $m^2$/g) available from Degussa Co., and the like may be preferably used.

Content of silica is 20 parts by mass or more, relative to 100 parts by mass of natural type rubber component. When the content of silica is less than 20 parts by mass, tearing strength tends to be insufficient. The content of silica is more preferably 25 parts by mass or more, relative to 100 parts by mass of natural type rubber component. Further, the content of silica is preferably 100 parts by mass or less, and more preferably 90 parts by mass or less, relative to 100 parts by mass of natural type rubber component. When the content of silica is more than 100 parts by mass, flex cracking resistance tends to be poor.

(Silane compound)

The rubber composition for base tread of the present invention contains a silane compound. Since epoxidized natural rubber (ENR) has higher polarity than natural rubber, when silica is blended into a rubber composition containing epoxidized natural rubber (ENR), the blended silica is localized in the ENR layer, which may deteriorate the abrasion resistance of rubber. Further, as silica is localized in the ENR layer having higher glass transition temperature, loss tangent (tanδ) at high temperature region increases, which may deteriorate the rolling resistance. By adding a silane compound, it is possible to solve these problems, and to obtain a rubber composition that achieves gripping property, rolling resistance and durability when tread part is abraded. Such effect is attributable to the fact that the silane compound lowers the polarity of silica. Here, the silane compound used in the rubber composition for base tread according to the present invention is a silane compound represented by the following general formula (1):

$$(X)_n\text{-Si-}Y_{(4-n)} \qquad (1)$$

(In the above formula (1), X represents a methoxy group or an ethoxy group, Y represents a phenyl group or a straight-chain or branched alkyl group, and n represents an integer of 1 to 3.)

In the above general formula (1), X is more preferably an ethoxy group for the reason that it has better compatibility with the rubber component. For the same reason, Y in the above general formula is more preferably a phenyl group. Further, in the above general formula (1), n is an integer from 1 to 3. When n is 0, it means that X is absent, and reactivity of the silane compound tends to increase. When n is 4, it means that Y is absent, and reactivity of silane compound tends to decrease.

Concrete examples of silane compound represented by the above general formula (1) are as recited above. Among those, phenyltriethoxysilane is preferred because compatibility with rubber and cost can be reduced. The silane compound may be used solely or in combination of two or more kinds.

Content of the silane compound is 4 parts by mass or more, and preferably 5 parts by mass or more, relative to 100 parts by mass of silica. When the content of silane compound is less than 4 parts by mass, flex cracking resistance tends to decrease. Further, the content of silane compound is 16 parts by mass or less, and preferably 15 parts by mass or less, relative to 100 parts by mass of silica. When the content of silane compound is more than 16 parts by mass, abrasion resistance tends to decrease.

(Silane coupling agent)

Preferably, the a silane coupling agent is blended together with silica into the rubber composition for base tread of the present invention. Concrete examples of the silane coupling agent are as recited above.

Among those, Si69 (bis(3-triethoxysilylpropyl) tetrasulfide), Si266 (bis(3-triethoxysilylpropyl)disulfide) available from Degussa Co., and the like are preferably used for the reason that they have excellent workability.

Content of the silane coupling agent is preferably 4 parts by mass or more, and more preferably 5 parts by mass or more, relative to 100 parts by mass of silica. When the content is less than 4 parts by mass, the effect of improving flex cracking resistance tends to be difficult to be obtained. Further, the content of silane coupling agent is preferably 20 parts by mass or less, and more preferably 15 parts by mass or less, relative to 100 parts by mass of silica. When it is more than 20 parts by mass, the effect of improving flex cracking resistance tends to be difficult to be obtained.

(Carbon black)

The rubber composition for base tread of the present invention may contain carbon black. BET specific surface area of carbon black is preferably 60 m$^2$/g or more, and more preferably 80 m$^2$/g or more. When BET specific surface area of carbon black is less than 60 m$^2$/g, the effect of improving flex cracking resistance tends to be difficult to be obtained. Further, BET specific surface area of carbon black is preferably 150 m$^2$/g or less, and more preferably 130 m$^2$/g or less. When BET specific surface area of carbon black is more than 150 m$^2$/g, workability tends to deteriorate.
When the rubber composition for base tread of the present invention contains carbon black, the content is preferably 20 parts by mass or less, and more preferably 15 parts by mass or less, relative to 100 parts by mass of natural type rubber component. By adding carbon black, it is possible to further improve the rubber strength and rubber hardness. However, from the view point of resource saving and environment protection, it is preferred that carbon black is not contained.

(Other blending agents)

The rubber composition for base tread of the present invention may further contain other additives, for example, a vulcanizing agent, vulcanization accelerator, stearic acid, oil, wax, antioxidant, zinc oxide and the like, likewise the case of rubber composition for bead apex.
Next, explanation will be made for a pneumatic tire of the present invention. Fig. 1 is a schematic section view showing one example of a pneumatic tire of the present invention.
A pneumatic tire 1 shown in Fig. 1 is structured to have a tread part 2 having a cap tread part 2a and a base tread part 2b, a pair of side wall parts 3 extending inward in the radial direction of the tire from both ends of tread part 2, and a bead part 4 situated at inward end of each side wall part 3. These bead parts 4 are bridged by a carcass 6, and on outer side of carcass 6 and on inner side of tread part 2, a belt layer 7 having a hoop effect is disposed for reinforcing tread part 2.
Carcass 6 is formed of at least one carcass ply in which carcass cord is arranged at an angle of, e.g., 70 to 90° with respect to tire equator CO, and the carcass ply extends from tread part 2, passes side wall part 3, and is folded from inner side to outer side of axial direction of tire around a bead core 5 of a bead part 4 and latched. Belt layer 7 is formed of two or more belt plies in which belt cord is arranged at an angle of 40° or less with respect to tire equator CO, and belt cords are overlaid in different orientations so that they cross each other between plies. In bead part 4, a bead apex rubber 8 extending outward in radial direction from bead core 5 is disposed, and on the inner side of carcass 6, an inner liner rubber 9 forming a lumen surface of tire is provided adjacently, and the outer side of carcass 6 is protected by a clinch rubber 4G and a side wall rubber 3G.
A pneumatic tire of the present invention is formed by using a rubber composition of the present invention in at least one of its bead apex rubber, and its base tread part. Preferably all of these parts are formed of a rubber composition of the present invention.
The pneumatic tire of the present invention contains materials of non-petroleum resource at higher rate, and exhibits excellent performance, while sufficient consideration is made for resource saving and environment protection. Therefore, it can be desirably used, for example, as an environmentally-friendly "eco tire" in a passenger car.
The pneumatic tire of the present invention may be produced by a conventionally known method. That is, when the rubber composition for bead apex according to the present invention is used, the rubber composition for bead apex having the aforementioned composition is kneaded, and extruded in its unvulcanized condition into a form coinciding with the form of a bead apex part of tire, and then molded on a tire molding machine by an usual method together with other parts of the tire, whereby an unvulcanized tire is formed. This unvulcanized tire is pressed under heating in a vulcanization machine, to obtain a pneumatic tire of the present invention. The same applies to the case where the rubber composition for base tread of the present invention is used.
In the following, the present invention will be described in more detail by way of Examples and Comparative examples which are given non-limitative manner.

<Examples 1 to 3 and Comparative examples 1 to 4>

Using the blending formulation shown in Table 1, blending components other than sulfur and a vulcanization accelerator were kneaded for 3 minutes in the condition of rotation speed of 80 rpm and 150°C using a Bambari Mixer (manufactured by Kobe Steel Ltd.). Then the obtained kneaded product was added with sulfur and a vulcanization accelerator in the blending amounts shown in Table 1, and kneaded for 5 minutes at 80°C using an open roll, to obtain an unvulcanized rubber composition (rubber composition for bead apex). Then the unvulcanized rubber composition was vulcanized for 30 minutes at 150°C, to give each vulcanized rubber sheet of Examples 1 to 3 and Comparative examples 1 to 4.

Table 1

| | | Example 1 | Example 2 | Example 3 | Comparative Example 1 | Comparative Example 2 | Comparative Example 3 | Comparative Example 4 |
|---|---|---|---|---|---|---|---|---|
| Blending amount (parts by mass) | Natural rubber (NR) | 100 | 100 | 80 | 100 | 100 | 100 | 100 |
| | Epoxidized natural rubber (ENR) | | | 20 | | | | |
| | Silane compound | 4 | 8 | 16 | | 2 | | 20 |
| | Carbon black | 5 | 5 | 5 | 5 | 5 | 5 | 5 |
| | Silica | 70 | 70 | 70 | 70 | 70 | 58 | 70 |
| | Silane coupling agent | 5.6 | 5.6 | 5.6 | 5.6 | 5.6 | 4.64 | 5.6 |
| | Stearic acid | 2 | 2 | 2 | 2 | 2 | 2 | 2 |
| | Zinc oxide | 4 | 4 | 4 | 4 | 4 | 4 | 4 |
| | Sulfur | 2.4 | 2.4 | 2.4 | 2.4 | 2.4 | 2.4 | 2.4 |
| | Vulcanization accelerator | 2.8 | 2.8 | 2.8 | 2.8 | 2.8 | 2.8 | 2.8 |
| Evaluation result | Extrusion workability | A | A | A | B | B | B | A |
| | Rubber hardness | 100 | 100 | 100 | 100 | 100 | 95 | 100 |
| | Rubber Strength | 100 | 100 | 100 | 100 | 100 | 95 | 95 |

The details of blending components used in Examples 1 to 3 and Comparative examples 1 to 4 are as follows.

(1) Natural rubber (NR): TSR20
(2) Epoxidized natural rubber (ENR): "ENR25" (epoxidation ratio 25% by mole) available from Kumpulan Guthrie Berhad
(3) Silane compound: "KBE-103" (phenyltriethoxy silane) available from Shin-Etsu Chemical Co., Ltd.
(4) Carbon black: "Show black N220" (BET: 111 m$^2$/g, DBP oil absorption 115 mL/100g) available from Showa Cabot
(5) Silica: "Ultrasil VN3" (BET specific surface area: 175 m$^2$/g) available from Degussa Co.
(6) Silane coupling agent:"Si69" (bis(3-triethoxysilylpropyl) tetrasulfide) available from Degussa Co.
(7) Stearic acid: stearic acid "Tsubaki" available from NOF Corporation
(8) Zinc oxide: "Zinc oxide No.1" available from Mitsui Mining & Smelting Co., Ltd.
(9) Sulfur: Powder sulfur available from Tsurumi Chemical Co., Ltd.
(10) Vulcanization accelerator: "NOCCELER NS" (N-tertbutyl-2-benzotiazolyl sulfamide) available from Ouchi Shinko Chemical Industrial Co., Ltd.

Unvulcanized rubber compositions and vulcanized rubber sheets of Examples 1 to 3 and Comparative examples 1 to 4 were subjected to the tests as shown below. Results are shown in Table1.

(Extrusion workability)

Shape of the rubber sheet material obtained by extruding an unvulcanized rubber composition using a laboratory extruder was visually checked. The one having such a trouble as defective edge was evaluated as "B", and the one having no problem in its shape was evaluated as "A."

(Rubber hardness)

In accordance with JIS-K6253, hardness was measured at room temperature using a type A hardness tester. Numerical values in Table 1 are relative values when the numerical value of Comparative example 1 is regarded as 100. The larger the numerical value, the higher the hardness of the rubber is meant.

(Rubber strength)

A No.3 dumbbell-shaped test piece was manufactured from a vulcanized rubber sheet, and subjected to a tensile test according to JIS-K6251 "Rubber, vulcanized or thermoplastic - Determination of tensile stress - strain properties", and tensile at break (TB) and elongation at break (EB) were respectively measured and a value of (TB×EB) was calculated. Each numerical value in Table 1 is a relative value when the numerical value of (TB×EB) of Comparative example 1 is regarded as 100. The higher the numerical value, the higher the strength of rubber is meant.

From the evaluation results of Table 1, it can be found that by adding 4 to 16 parts by mass of silane compound relative to 100 parts by mass of rubber component, extrusion workability is improved, and excellent rubber hardness and rubber strength are exhibited. It is also found that when a silane compound is not added, or when the adding amount of silane compound is small, extrusion workability is poor, and when the adding amount of silane compound is too large, the rubber strength tends to decrease.

<Examples 4 to 6 and Comparative examples 5 to 7>

According to the blending formulation shown in Table 2, blending components other than sulfur and a vulcanization accelerator were kneaded for 3 minutes in the condition of rotation speed of 80 rpm and 150°C using a 1.7 L Bambari Mixer (manufactured by Kobe Steel Ltd.). Then the obtained kneaded product was added with sulfur and a vulcanization accelerator in the blending amounts shown in Table 2, and kneaded for 5 minutes at 80°C using an open roll, to obtain an unvulcanized rubber composition (rubber composition for base tread). Then the unvulcanized rubber composition was vulcanized for 30 minutes at 150°C, to give each vulcanized rubber sheet of Examples 4 to 6 and Comparative examples 5 to 7.

Next, the above rubber composition for base tread in unvulcanized condition was extruded so as to be conform with the shape of the base tread part, and bonded with other members, and subjected to press vulcanization at 160°C for 20 minutes. In this manner, pneumatic tires of Examples 4 to 6 and Comparative examples 5 to 7 (size: 195/65R15) were produced. These pneumatic tires have such a structure as shown in Fig. 1, and the details are as follows.

Carcass: made of polyester (1670 dtex/2)

Belt layer: made of steel cord, structure 1×4, angle 22°×22°
Thickness ratio of cap tread part /base tread part: 80/20

Table 2

|  |  | Example 4 | Example 5 | Example 6 | Comparative Example 5 | Comparative Example 6 | Comparative Example 7 |
|---|---|---|---|---|---|---|---|
| Blending amount (parts by mass) | Natural rubber (NR) | 80 | 40 | 20 | 40 | 80 |  |
|  | Epoxidized natural rubber (ENR) | 20 | 60 | 80 | 60 | 20 | 100 |
|  | Silane compound | 3.5 | 3.5 | 3.5 |  |  |  |
|  | Carbon black | 5 | 5 | 5 | 5 | 5 | 5 |
|  | Silica | 35 | 35 | 35 | 35 | 35 | 35 |
|  | Silane coupling agent | 2.8 | 2.8 | 2.8 | 2.8 | 2.8 | 2.8 |
|  | Oil | 15 | 15 | 15 | 15 | 15 | 0 |
|  | Wax | 1.5 | 1.5 | 1.5 | 1.5 | 1.5 | 1.5 |
|  | Antioxidant | 2 | 2 | 2 | 2 | 2 | 2 |
|  | Stearic acid | 2 | 2 | 2 | 2 | 2 | 2 |
|  | Zinc oxide | 3 | 3 | 3 | 3 | 3 | 3 |
|  | Sulfur | 1.5 | 1.5 | 1.5 | 1.5 | 1.5 | 1.5 |
|  | Vulcanization accelerator | 2.0 | 2.0 | 2.0 | 2.0 | 2.0 | 2.0 |
| Evaluation result | Gripping property | 98 | 105 | 137 | 100 | 90 | 110 |
|  | Rolling resistance | 151 | 115 | 81 | 100 | 130 | 51 |
|  | Abrasion resistance | 130 | 113 | 92 | 100 | 120 | 70 |

The details of blending components used in Examples 4 to 6 and Comparative examples 5 to 7 are as follows.

(1) Natural rubber (NR) :TSR20
(2) Epoxidized natural rubber (ENR): "ENR25" (epoxidation ratio 25% by mole) available from Kumpulan Guthrie Berhad
(3) Silane compound: "KBE-103" (phenyltriethoxy silane) available from Shin-Etsu Chemical Co., Ltd.
(4) Carbon black: "Show black N351" available from Showa Cabot
(5) Silica: "Ultrasil VN3" (BET specific surface area: 175 $m^2$/g) available from Degussa Co.
(6) Silane coupling agent: "Si266" (bis(3-triethoxysilylpropyl)disulfide) available from Degussa Co.
(7) Oil: soy bean oil available from the Nisshin Oillio Group Ltd.
(8) Wax: "SUNNOC wax" available from Ouchi Shinko Chemical Industrial Co., Ltd.
(9) Antioxidant: "NOCRAC 6C" (N-(1, 3-dimethylbutyl)
-N'-phenyl-p-phenylenediamine) available from Ouchi Shinko Chemical Industrial Co., Ltd.
(10) Stearic acid: stearic acid "Tsubaki" available from NOF Corporation
(11) Zinc oxide: "Zinc oxide No.1" available from Mitsui Mining & Smelting Co., Ltd.
(12) Sulfur: Powder sulfur available from Tsurumi Chemical Co., Ltd.

(13) Vulcanization accelerator: "NOCCELER NS" (N-tertbutyl-2-benzotiazolyl sulfamide) available from Ouchi Shinko Chemical Industrial Co., Ltd.

Vulcanized rubber sheets and pneumatic tires for test of Examples 4 to 6 and Comparative examples 5 to 7 were subjected to the following tests. Results are shown in Table 2.

(Gripping property)

After removing a cap tread part of the pneumatic tire for test thus produced, the tire was put on a passenger car of the class of 1800cc displacement, equipped with ABS, and lock brake was applied while the car was running at a speed of 100 km/h on wet asphalt road having skid number of about 50, and a distance required by the passenger car for stopping was measured, and deceleration rate during lock braking was calculated Each numerical value shown in Table 2 is a relative value when deceleration rate of Comparative example 1 is regarded as 100. The larger the numerical value, the more excellent the wet ABS braking performance, and the more excellent the gripping property are meant.

(Rolling resistance)

Using a viscoelasticity spectrometer VES (available from IWAMOTO Quartz GlassLab Co., Ltd.), loss tangent (tanδ) of each vulcanized rubber sheet was measured in the conditions of temperature of 70°C, initial strain of 10%, and dynamic strain of 2%. Each numerical value of Table 2 is shown by index according to the following calculation formula, based on the numerical value of Comparative example 1 as 100. The larger the index, the more excellent the rolling resistance is meant.

$$\text{Rolling resistance index} = (\tan\delta \text{ of Comparative example 1})/(\tan\delta \text{ of particular Example or Comparative example}) \times 100$$

(Abrasion resistance)

Using a Lambourn type abrasion test machine, abrasion amount of each vulcanized rubber sheet was measured at room temperature in the condition of a load of 1.0kgf and a slip rate of 30%. Each numerical value in Table 2 is an inverses of abrasion amount shown by index, based on the numerical value of Comparative example 1 as 100. The larger the index, the higher the abrasion resistance is meant.

Although the present invention has been described and illustrated in detail, it is clearly understood that the same is by way of illustration and example only and is not to be taken by way of limitation, the scope of the present invention being interpreted by the terms of the appended claims.

**Claims**

1. A rubber composition for tire comprising:

    a rubber component containing at least one selected from the group consisting of natural rubber, epoxidized natural rubber and deproteinized natural rubber;
    silica; and
    a silane compound represented by the following general formula (1)

    $$(X)_n\text{-Si-}Y_{(4-n)} \qquad (1)$$

    (wherein X represents a methoxy group or an ethoxy group, Y represents a phenyl group or a straight-chain or branched alkyl group, and n represents an integer of 1 to 3).

2. The rubber composition for tire according to claim 1 used for manufacturing bead apex rubber of tire, wherein 60 parts by mass or more of silica is contained, relative to 100 parts by mass of said rubber component, and 4 to 16 parts by mass of silane compound represented by the above general formula (1) is contained, relative to 100 parts by mass of said rubber component.

3.  The rubber composition for tire according to claim 2, further comprising 5 parts by mass or less of carbon black, relative to 100 parts by mass of said rubber component.

4.  The rubber composition for tire according to claim 2, further comprising 5 to 15 parts by mass of silane coupling agent, relative to 100 parts by mass of said silica.

5.  A pneumatic tire comprising bead apex rubber consisting of the rubber composition for tire according to claim 2.

6.  The rubber composition for tire according to claim 1, used for manufacturing base tread rubber of tire, wherein said rubber component is a natural type rubber component including 5 to 85% by mass of natural rubber and 95 to 15% by mass of epoxidized natural rubber,
    20 to 100 parts by mass of silica is contained, relative to 100 parts by mass of said natural type rubber component; and 4 to 16 parts by mass of silane compound represented by the above general formula (1) is contained, relative to 100 parts by mass of said silica.

7.  The rubber composition for tire according to claim 6, further comprising: 60 parts by mass or less of polybutadiene rubber and/or styrene butadiene rubber, relative to 100 parts by mass of said natural type rubber component.

8.  The rubber composition for tire according to claim 6, further comprising 4 to 20 parts by mass of silane coupling agent, relative to 100 parts by mass of said silica.

9.  A pneumatic tire comprising base tread rubber consisting of the rubber composition for tire according to claim 6.

FIG.1

**INTERNATIONAL SEARCH REPORT**

| International application No. |
|---|
| PCT/JP2008/054114 |

**A. CLASSIFICATION OF SUBJECT MATTER**
*C08L7/00*(2006.01)i, *B60C1/00*(2006.01)i, *B60C15/06*(2006.01)i, *C08K3/04*(2006.01)i, *C08K3/36*(2006.01)i, *C08K5/5419*(2006.01)i, *C08L15/00*(2006.01)i

According to International Patent Classification (IPC) or to both national classification and IPC

**B. FIELDS SEARCHED**

Minimum documentation searched (classification system followed by classification symbols)
C08L7/00-21/00, B60C1/00, B60C15/06, C08K3/04, C08K3/36, C08K5/5419

Documentation searched other than minimum documentation to the extent that such documents are included in the fields searched
Jitsuyo Shinan Koho          1922-1996     Jitsuyo Shinan Toroku Koho     1996-2008
Kokai Jitsuyo Shinan Koho     1971-2008     Toroku Jitsuyo Shinan Koho     1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2007-056205 A (Sumitomo Rubber Industries, Ltd.),<br>08 March, 2007 (08.03.07),<br>Claims; Par. No. [0032]<br>& US 2007-0049670 A1    & EP 001757656 A1 | 1<br>2-9 |
| X<br>Y | JP 2001-240700 A (Sumitomo Rubber Industries, Ltd.),<br>04 September, 2001 (04.09.01),<br>Claims; Par. Nos. [0044], [0046]<br>(Family: none) | 1<br>2-9 |
| X | JP 09-087427 A (Sumitomo Rubber Industries, Ltd.),<br>31 March, 1997 (31.03.97),<br>Claims; Par. No. [0018]<br>(Family: none) | 1 |

| [X] | Further documents are listed in the continuation of Box C. | | [ ] | See patent family annex. |
|---|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    15 May, 2008 (15.05.08) | Date of mailing of the international search report<br>    27 May, 2008 (27.05.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/054114 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-316526 A  (Sumitomo Rubber Industries, Ltd.), 16 November, 2001 (16.11.01), Claims; Par. Nos. [0006], [0026] (Family: none) | 2-9 |
| Y | JP 2001-164051 A  (Sumitomo Rubber Industries, Ltd.), 19 June, 2001 (19.06.01), Claims; Par. Nos. [0009], [0038] (Family: none) | 2-9 |
| P,X | JP 2007-246712 A  (Sumitomo Rubber Industries, Ltd.), 27 September, 2007 (27.09.07), Claims (Family: none) | 1 |
| P,X | JP 2007-246711 A  (Sumitomo Rubber Industries, Ltd.), 27 September, 2007 (27.09.07), Claims (Family: none) | 1 |
| P,X | JP 2007-186031 A  (Sumitomo Rubber Industries, Ltd.), 26 July, 2007 (26.07.07), Claims (Family: none) | 1 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003063206 A
- JP 7118454 A
- JP 7292158 A
- JP 9087427 A
- JP 10060175 A